# EUROPEAN PATENT SPECIFICATION

(11) **EP 3 078 439 B1**
(45) Date of publication and mention of the grant of the patent: **31.01.2018**
(21) Application number: 15187599.4
(22) Date of filing: 30.09.2015
(51) Int. Cl.: B23D 45/04

(54) **CUTTING HEAD FOR A CUTTING-OFF MACHINE, CUTTING-OFF MACHINE EQUIPPED WITH SAID CUTTING HEAD AND METHOD OF OPERATING SAID CUTTING HEAD**
SCHNEIDKOPF FÜR EINE SCHNEIDMASCHINE, SCHNEIDMASCHINE AUSGESTATTET MIT EINEM SOLCHEN SCHNEIDKOPF, UND VERFAHREN ZUM BETREIBEN DIESES SCHNEIDKOPFES
TÊTE DE COUPE POUR UNE MACHINE À TRONÇONNER, MACHINE À TRONÇONNER EQUIPÉE D'UNE TELLE TÊTE DE COUPE ET MÉTHODE POUR OPÉRER CETTE TÊTE DE COUPE

(30) Priority: 07.04.2015 IT MI20150489
(43) Date of publication of application: 12.10.2016
(73) Proprietor: Mecal S.r.l., 27030 Frascarolo (PV) (IT)
(72) Inventor: CAVEZZALE, Ennio, 27030 Frascarolo (IT)
(74) Representative: Perani & Partners S.p.A.

(56) References cited:
- EP-A1- 2 364 805
- EP-A2- 1 036 623
- WO-A1-2014/128553
- DE-A1- 4 411 255
- DE-U1- 8 631 960
- US-A- 5 408 907

## Description

The present invention relates to a cutting head for a cutting-off machine, a cutting-off machine having said cutting head and method of operating said cutting head.

The present invention particularly finds application in the manufacture of aluminum door and window frames, especially for cutting large-cross section profiles.

Cutting heads for use in cutting-off machines for profiles have been known in the art. In a first type of cutting heads, the circular cutting blade is tilted relative to the surface that bears the profile to be cut with an upward or downward movement. In a second type of cutting heads the circular cutting blade is moved in a rectilinear path, perpendicular to the longitudinal direction of extension of the profile to be cut. The above mentioned cutting heads have inadequate cutting diagrams for large-section profiles, having either a main horizontal extension or a main vertical extension. One solution to this problem consists in increasing the diameter of the circular blade. Nevertheless, the increase of the circular blade diameter is limited by the cutting parameters of the blade, dictated by both operational and construction requirements, therefore it is not feasible beyond certain limits.

Document EP 1036623 A2 discloses a cutting head for a cutting-off machine, said cutting head comprising a bearing base, a support structure mounted to said bearing base to rotate about a first rotation axis, said support structure comprising a support surface for a workpiece to be cut and a cutting area, which is configured to receive the workpiece to be cut, a cutting unit comprising a circular blade which is mounted to rotate about a second rotation axis, a circular blade inclination unit, which is coupled to said cutting unit to incline said cutting unit about an inclination axis perpendicular to said first rotation axis and said second rotation axis, a circular blade feeding unit coupled to said circular blade inclination unit to move said cutting unit along a rectilinear feeding direction, which is parallel or coincident with the inclination axis, between a first travel limit position and a second travel limit position.

EP2364805 discloses a cutting head for use in a cutting-off machine for profiles having a mainly horizontally extending cross section. The cutting head comprises a bearing plate for supporting a workpiece to be cut, an abutment surface against which a lateral face of the workpiece may abut and a circular blade fixed to a flange. The flange is supported in the cutting head and may be inclined about an inclination axis. The cutting head also comprises a selector device, for selecting either of two operating modes. In the first operating mode, the flange is behind the abutment surface, and in the second operating mode the flange projects out of the abutment surface. This cutting head can partially obviate the prior art drawbacks but is still inadequate for profiles having a large horizontally and vertically-extending cross section.

Therefore, the object of the present invention is to provide a cutting head for a cutting-off machine that has such structural and functional features as to fulfill the above needs, while obviating the drawbacks of prior art.

These and other objects, as better explained hereafter, are fulfilled by a cutting head as defined in the accompanying claim 1, and a method of operating such a cutting head as defined in claim 8. The invention will be now described in greater detail with reference to a preferred embodiment thereof, given by way of illustration and without limitation, and shown in the annexed drawings, in which:
- Figure 1 shows a perspective view of a cutting-off machine with a cutting head according to the present invention,

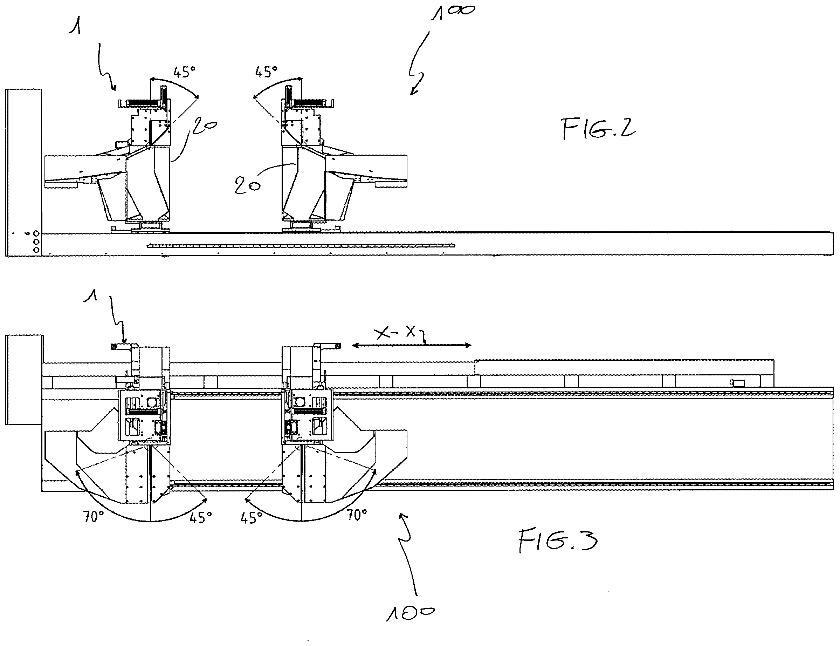

- Figures 2 and 3 show different plan views of the machine of Figure 1,
- Figures 4a to 4d show plan views of the cutting head of Figure 1 in successive operating configurations, with the blade inclined at an angle of 0°,
- Figures 5a to 5d show plan views of the cutting head of Figure 1 in successive operating configurations, with the blade inclined at an angle of 45°,

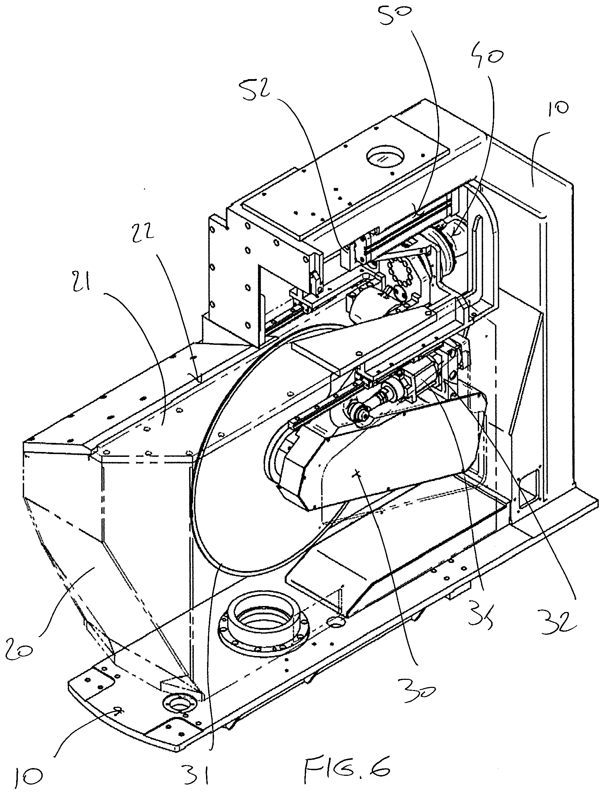

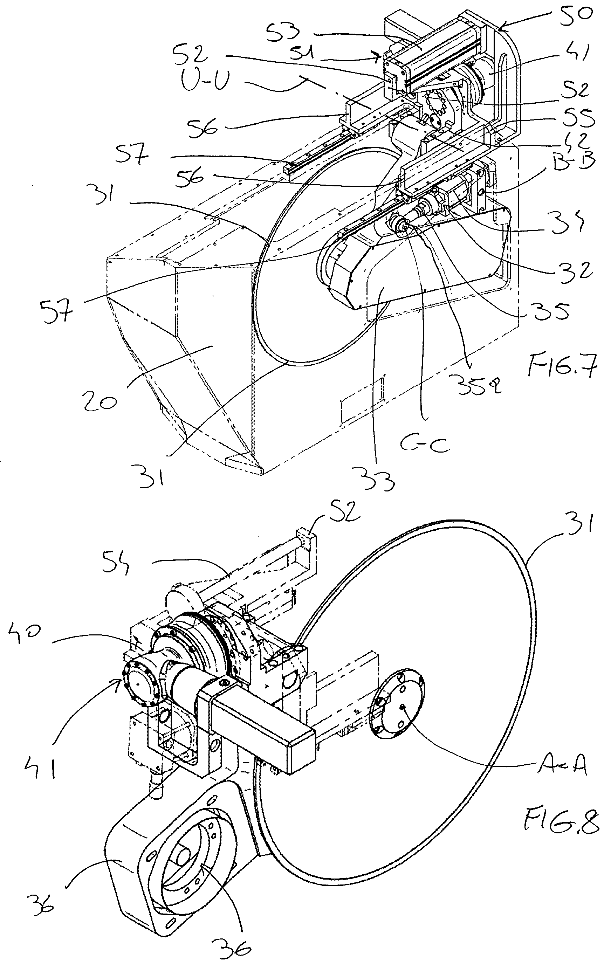

- Figures 6, 7 and 8 show different perspective views of the cutting head of Figure 1,
- Figure 9 show a cutting diagram obtained with the cutting head of Figure 1 in different operating configurations.

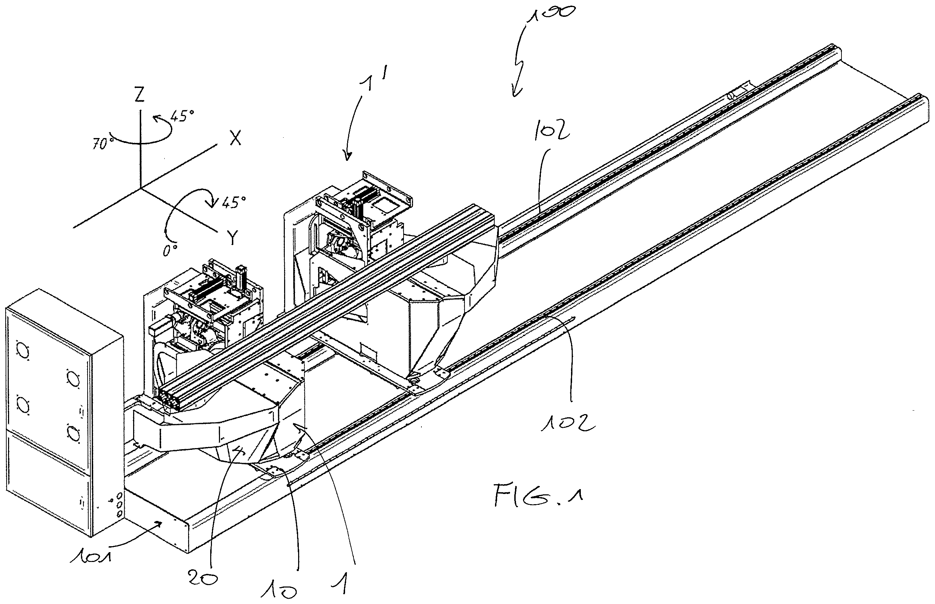

Referring to Figure 1, a cutting-off machine 100 is shown, which comprises two cutting heads 1 and 1'.

For simplicity, reference will be made hereinafter, without limitation, to a cutting head 1 according to one embodiment of the present invention. The cutting head 1' may be a cutting head identical or symmetrical to the cutting head 1, or a different cutting head.

The cutting head 1 comprises a bearing base 10 having a support structure 20 mounted thereto to rotate about a first rotation axis Z-Z.

The support structure 20 comprises a support surface 21 for a workpiece P to be cut and a cutting area 22 configured to receive the workpiece P to be cut, e.g. a profile for door or window frames. The support surface 21 lies perpendicular to the first rotation axis Z-Z.

According to one embodiment, the bearing base 10 is mounted to slide in a longitudinal direction X-X on guide members 102 fixed to the frame 101 of the cutting-off machine 100.

The cutting head 1 comprises a cutting unit 30, a blade inclination unit 40 and a blade feeding unit 50.

The cutting unit 30 comprises a circular blade 31 which is mounted to rotate about a second rotation axis A-A. The cutting unit 30 with the circular blade 21 is mounted to tilt about a tilt axis U-U parallel to the second rotation axis A-A between a rest position and a cutting position.

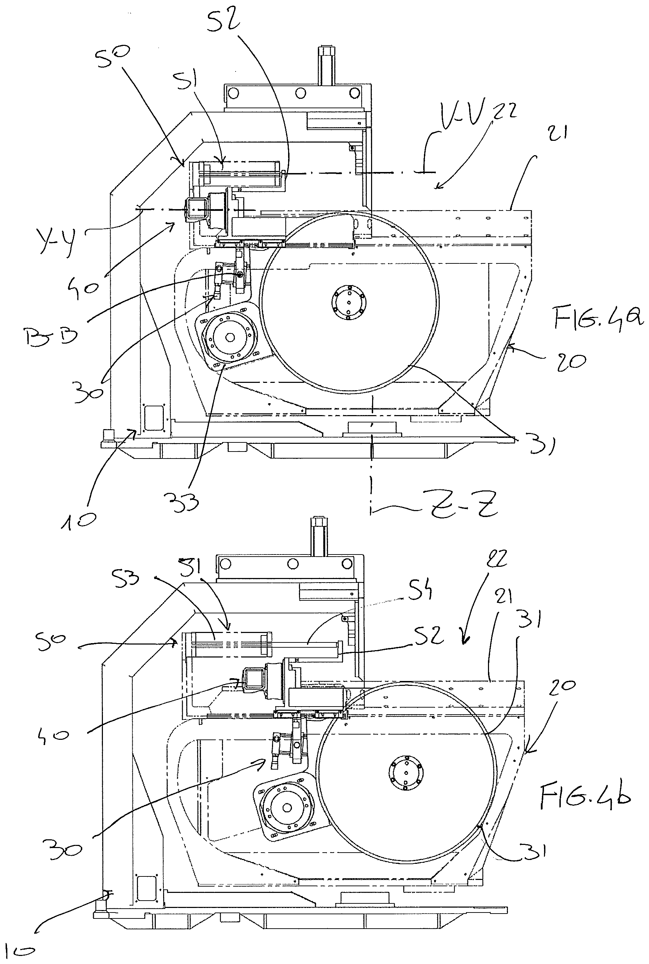

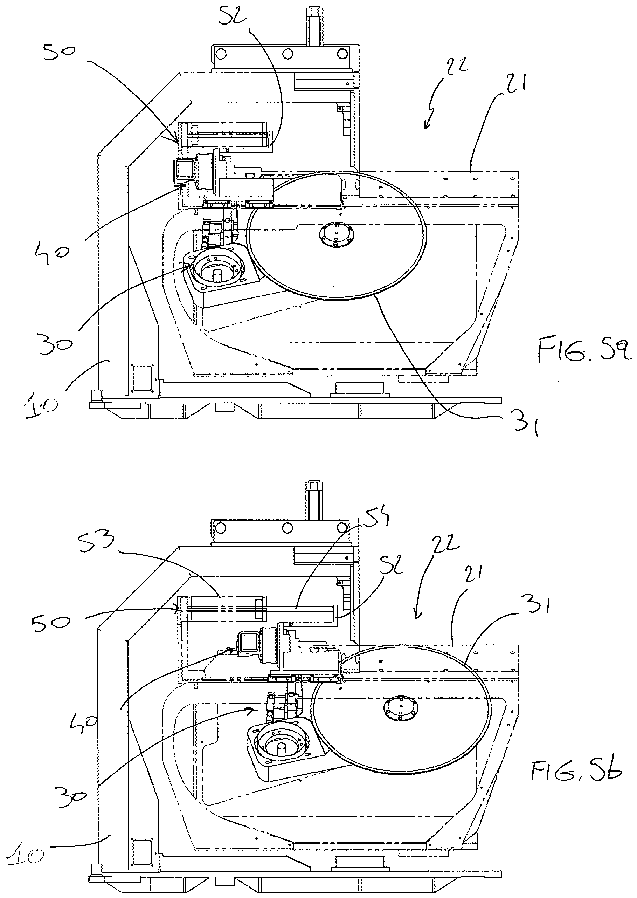

In the rest position see Figures 4a, 4b and 5a, 5b, the circular blade 31 is disengaged from the cutting area 22, whereas in the cutting position the circular blade 31 is within the cutting area 22.

The blade inclination unit 40 is coupled to the cutting unit 30 to incline the cutting unit 30 about an inclination axis Y-Y perpendicular to the first rotation axis Z-Z and the second rotation axis A-A.

Particularly, the circular blade inclination unit 40 is configured to incline the cutting unit 30, and hence the circular blade 31, at an inclination angle ranging from 0° to 45°.

Advantageously, the support structure 20 is configured to rotate relative to the support base 10 about the first rotation axis Z-Z through a rotation angle ranging from -70° to 45°. Drive members (not shown) are provided for this purpose, which are connected to the bearing base 10 and the support structure 20.

The circular blade feeding unit 50 is fixed to the support structure 20 and is coupled to the circular blade inclination unit 40 to move the blade inclination unit 40 and hence the cutting unit 30 with the circular blade 31 along a rectilinear feeding direction V-V, which is parallel to or coincident with the inclination axis Y-Y, between a first travel limit position and a second travel limit position. Due to the possibility of moving the circular blade 31 between the rest position and the cutting position and between the first and second travel limit positions, the circular blade 31 may assume four positions at the vertices of an ideal quadrilateral, the vertices being represented by the rest position in the first travel limit position, the rest position in the second travel limit position, the cutting position in the second travel limit position and the cutting position in the second travel limit position.

Assuming that the rotation angle of the support structure 20 is set to 0°, with an inclination angle of 0°, the circular blade 31 is perpendicular to the bearing plate 21, and hence the second rotation axis A-A of the circular blade 31 is parallel to the bearing plate 21 and extends along the longitudinal direction X-X, whereas with an inclination angle of 45°, the circular blade 31 forms an angle of 45° with the bearing plate 21 and hence the second rotation axis A-A of the circular blade 31 forms an angle of 45° with the bearing plate 21 and with the longitudinal direction X-X.

Assuming that the inclination angle of the circular blade 31 is set to 0°, with a rotation angle of 0° the plane of the circular blade 31 defines a reference plane perpendicular to the longitudinal direction X-X, whereas with rotation angles of -70° and +45° respectively, the plane of the circular blade 31 forms angles of -70° and +45° relative to the reference plane.

The blade feeding unit 50 is fixed to the support structure 20 and is configured to move the blade inclination unit 40 and the cutting unit 30 coupled thereto relative to the support structure 20 along the rectilinear feeding direction V-V between the first and the second travel limit positions.

According to one embodiment, the blade feeding unit 50 comprises a mechanism (not shown) for adjusting the second travel limit position along the rectilinear feeding direction V-V.

According to one embodiment, the blade feeding unit 50 comprises a feed actuating member 51 fixed to the support structure 20 and a slider 52 which is coupled to the feed actuating member 51. The feed actuating member 51 is adapted to be actuated to move the slider 52 relative to the support structure 20 along the rectilinear feeding direction V-V between the first and the second travel limit positions.

Here, the feed actuating member 51 comprises an actuating cylinder 53 fixed to the support structure 20 and a piston 54 which is mounted to move relative to the actuating cylinder 53 along the rectilinear feeding direction V-V and fixed to the slider 52,

The slider 52 is rigidly joined to a plate 55 having two guide elements 56 that extend along the rectilinear feeding direction V-V. Each guide element 56 is coupled to a respective guide element 57 rigidly joined to the support structure 20, so as to slide along the rectilinear feeding direction V-V.

The feed actuating member 51 may be an electric stepper motor or a hydraulic or pneumatic actuating device.

The blade inclination unit 40 comprises a rotation actuating member 41 rigidly joined to the slider 52, in this example fixed to the plate 55 that is rigidly joined to the slider 52, and is configured to rotate the cutting unit 30 relative to the blade feeding unit 50 and hence relative to the support structure 20 about the inclination axis Y-Y, to thereby incline the circular blade 31 about the inclination axis Y-Y.

Particularly, the rotation actuating member 41 is rotatably coupled to a support plate 42 that is rigidly joined to the cutting unit 30 and is configured to control the rotation of the support plate 42 about the inclination axis Y-Y.

Advantageously, the rotation actuating member 41 comprises an electric motor.

The cutting unit 30 comprises a tilt actuating member 32 and a support base 33, upon which the circular blade 31 is mounted to rotate about the second rotation axis A-A.

The support base 33 has a connection 36 for a rotation actuating member (not shown), actuating the rotation of the unit 31, e.g. an electric motor.

The support base 33 for the cutting unit 30 is coupled to the support plate 42 for the blade inclination unit 40 to rotate about the tilt axis U-U.

Particularly, the tilt actuating member 32 is coupled to the support base 33 to rotate the support base 33 about the tilt axis U-U.

According to the embodiment of the figures, the tilt actuating member 32 comprises a cylinder 34 and a piston 35 which is configured to be actuated to move relative to the cylinder 34 along the direction of extension of the piston 35. The cylinder 34 is coupled to the support plate 42 to rotate about a rotation axis B-B parallel to the tilt axis U-U, whereas one end 35a of the piston 35 is rotatably coupled to the support base 33 to rotate about a rotation axis C-C parallel to the tilt axis U-U.

As a result of an actuation movement of the piston 35 extending out of the cylinder 34, the piston 35 acts upon the support base 33, which is coupled to the support plate 42 to rotate about the tilt axis U-U.

Since the cylinder 34 is constrained to rotate about the rotation axis B-B parallel to the tilt axis U-U, the action of the piston 35 causes the support base 33 to rotate relative to the support plate 42 about the tilt axis U-U, the support base 33 to rotate relative to the piston 35 about the rotation axis B-B and the cylinder 34 to simultaneously rotate relative to the support plate 42 about the rotation axis C-C to move the circular blade 31 from the rest position to the cutting position.

In order to control the actuating members 51, 41 and 32, and particularly to control the actuation sequence, the cutting head 1 comprises a control unit (not shown) connected with each of the actuating members 51, 41 and 32 and configured to control the actuation of each of said actuating members 51, 41 and 32.

In one operating mode of the cutting head 1, from a condition in which the circular cutting blade 30 is in the rest position and the slider 52 of the blade actuating unit 50 is in the first travel limit position (see Figs. 4a and 5a), the blade actuating unit 50 is actuated to move the slider 52 to the second travel limit position, with the circular blade 31 still in the rest position (see Figs. 4b and 5b).

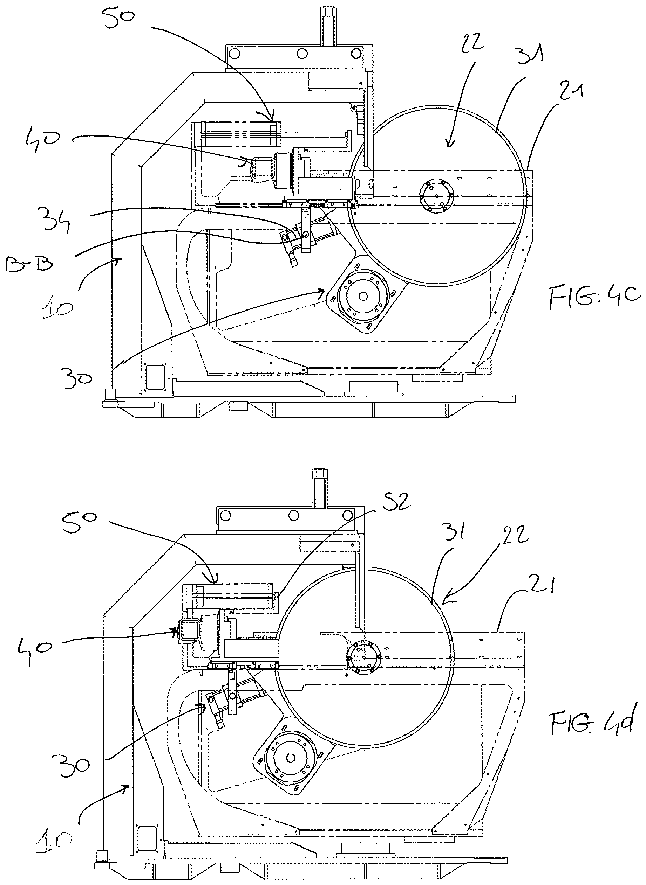

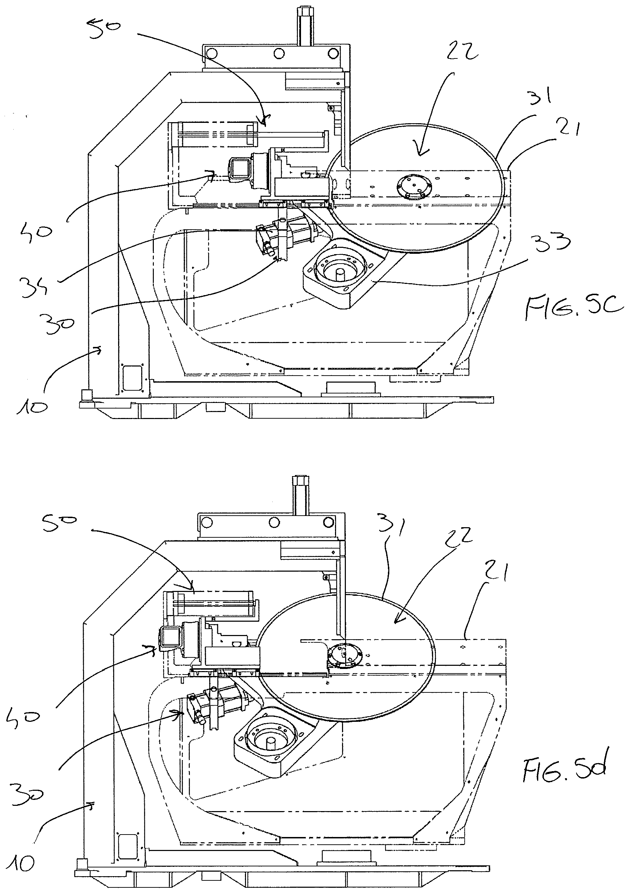

Then, the tilt actuating member 32 is actuated to move the circular blade 31 from the rest position to the cutting position (see Figs. 4c and 5c). Finally, the blade actuating unit 50 is actuated to move the circular blade 31 from the second travel limit position to the first travel limit position (see Figs. 4d and 5d). Thus, the circular blade 31 may travel the full length of its stroke along the rectilinear feeding direction V-V between the first and the second travel limit positions, and this will enable it to also cut workpieces P having large cross sections in either horizontal or vertical direction.

At the end of the cutting operation, the circular blade 31 may be moved back to the rest position to be ready for a new cycle (see Figs. 4a and 5a).

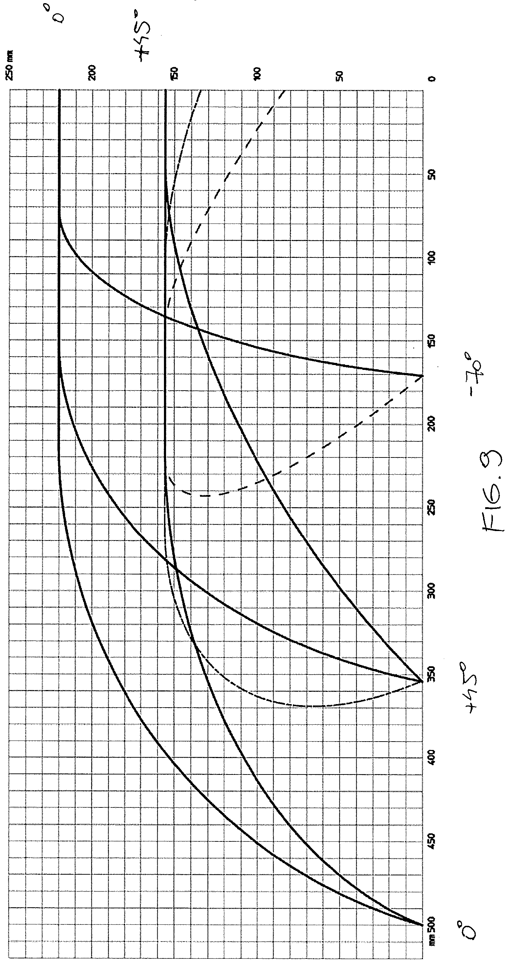

Figure 9 show a cutting diagram obtained with the cutting head 1 using a 600 mm-circular blade. In the vertical axes, the angles of 45° and 0° correspond to the angles of inclination of the circular blade 31 relative to the direction of the workpiece P to be cut. In the horizontal axis, the angles of 0°, +45° and -70° indicate the angles of rotation relative to the axis Z-Z.

As clearly shown in the above description, the cutting head of the present invention fulfills the above mentioned needs and also obviates the drawbacks of prior art cutting heads as set out in the introduction of this disclosure.

Those skilled in the art will obviously appreciate that a number of changes and variants may be made to the cutting head of the invention as described hereinbefore to meet specific needs, without departure from the scope of the invention, as defined in the following claims.

## Claims

1. A cutting head (1) for a cutting-off machine (100), said cutting head (1) comprising:
- a bearing base (10),
- a support structure (20) mounted to said bearing base (10) to rotate about a first rotation axis (Z-Z), said support structure (20) comprising a support surface (21) for a workpiece to be cut (P) and a cutting area (22), which is configured to receive the workpiece to be cut (P),
- a cutting unit (30) comprising a circular blade (31) which is mounted to rotate about a second rotation axis (A-A), said cutting unit (30) being mounted to tilt about a tilt axis (U-U), parallel to said second rotation axis (A-A) between a rest position, in which said circular blade (31) is disengaged from said cutting area (22) and a cutting position, in which said circular blade (31) is in said cutting area (22) to cut said workpiece to be cut (P),
- a circular blade inclination unit (40), which is coupled to said cutting unit (30) to incline said cutting unit (30) about an inclination axis (Y-Y) perpendicular to said first rotation axis (Z-Z) and said second rotation axis (A-A),
- a circular blade feeding unit (50), fixed to said support structure (20) and is coupled to said circular blade inclination unit (40) to move said circular blade inclination unit (40) and said cutting unit (30) along a rectilinear feeding direction (V-V), which is parallel or coincident with the inclination axis (Y-Y), between a first travel limit position and a second travel limit position.

2. A cutting head (1) as claimed in claim 1, wherein:
- said circular blade feeding unit (50) comprises a feed actuating member (51) fixed to the support structure (20) and a slider (52) which is coupled to the feed actuating member (51) to move along the rectilinear feeding direction (V-V) between said first and second travel limit positions,
- said circular blade inclination unit (40) comprises a rotation actuating member (41), which is rigidly joined to said slider (52) and is configured to rotate said cutting unit (30) relative to the circular blade inclination unit (50) about the inclination axis (Y-Y),
- said cutting unit (30) comprises a tilt actuating member (32) and a support base (33), said circular blade (31) being mounted to said support base (33) to rotate about the second rotation axis (A-A),
- said support base (33) is coupled to said support plate (42) to rotate about the tilt axis (U-U) and said tilt actuating member (32) is coupled to said support base (33) to rotate the support base (33) about the tilt axis (U-U) relative to the support base (42).

3. A cutting head (1) as claimed in claim 2, wherein:
- said tilt actuating member (32) comprises a cylinder (34) and a piston (35) which is configured to be actuated to move relative to the cylinder (34) along the direction of extension of the piston (35),
- said cylinder (34) is coupled to the support plate (42) to rotate about a rotation axis (B-B) parallel to the tilt axis (U-U),
- one end (35a) of the piston (35) is rotatably coupled to the support base (33) to rotate about a rotation axis (C-C) parallel to the tilt axis (U-U),

4. A cutting head (1) as claimed in claim 2 or 3, wherein:
- said feed actuating member (51) comprises an actuating cylinder (53) fixed to the support structure (20) and a piston (54) which is mounted to move relative to the actuating cylinder (53) along the rectilinear feeding direction (V-V) and fixed to the slider (52),
- said slider (52) is rigidly joined to a plate (55) having two guide elements (56) that extend along the rectilinear feeding direction (V-V),
- each guide element (56) is coupled to a respective guide element (57) rigidly joined to the support structure (20), so as to slide along the rectilinear feeding direction (V-V).

5. A cutting head (1) as claimed in any of claims 1 to 4, wherein:
- said circular blade inclination unit (40) is configured to incline the cutting unit (30) and the circular blade (31) at an inclination angle ranging from 0° to 45°,
- said support structure (20) is configured to rotate about the first rotation axis (Z-Z) through a rotation angle ranging from -70° to 45°.

6. A cutting head (1) as claimed in claim 5, wherein:
- said support surface (21) lies perpendicular to the first rotation axis (Z-Z),
- when said rotation angle is 0° and said inclination angle is 0°, said circular blade (31) is perpendicular to the support surface (21).

7. A cutting-off machine (100) comprising:
- a frame (101) with two guide members (102) extending along a longitudinal direction (X-X),
- at least one cutting head (1) as claimed in any of claims 1 to 6,
wherein said bearing base (10) is mounted to slide along said longitudinal direction (X-X).

8. A method of operating a cutting head (1) as claimed in any of claims 1 to 6, said method comprising the following steps, from a state in which said circular blade (31) is in its rest position and said cutting unit (30) is in said first travel limit position:
- moving said cutting unit (30) along said rectilinear feeding direction (V-V) from said first travel limit position to said second travel limit position,
- rotating said cutting unit (30) about said tilt axis (U-U) to move said circular blade (31) from said rest position to said cutting position,
- moving said cutting unit (30) along said rectilinear feeding direction (V-V) from said second travel limit position to said first travel limit position,
- rotating said cutting unit (30) about said tilting axis (U-U) to move said circular blade (31) from said cutting position to said rest position.

## Patentansprüche

1. Schneidkopf (1) für eine Schneidemaschine (100), der Schneidkopf (1) umfassend:
- ein Traggestell (10),
- eine Auflagestruktur (20), die an dem Traggestell (10) montiert ist zum Drehen um eine erste Rotationsachse (Z-Z), wobei die Auflagestruktur (20) eine Auflagefläche (21) für ein zu schneidendes Werkstück (P) und einen Schneidebereich (22) umfasst, der zur Aufnahme des zu schneidenden Werkstücks (P) ausgebildet ist,
- eine Schneideeinheit (30), umfassend ein Kreismesser (31), das montiert ist zum Drehen um eine zweite Rotationsachse (A-A), wobei die Schneideeinheit (30) montiert ist zum Kippen um eine Kippachse (U-U), die parallel zur zweiten Rotationsachse (A-A) verläuft, zwischen einer Ruhestellung, in der das Kreismesser (31) aus dem Schneidebereich (22) ausgerückt ist, und einer Schneidestellung, in der das Kreismesser (31) sich in dem Schneidebereich (22) befindet, um das zu schneidende Werkstück (P) zu schneiden,
- eine Kreismesser-Neigungseinheit (40), die mit der Schneideeinheit (30) gekoppelt ist, um die Schneideeinheit (30) um eine Neigungsachse (Y-Y) zu neigen, die rechtwinklig zur ersten Rotationsachse (Z-Z) und zur zweiten Rotationsachse (A-A) verläuft,
- eine Kreismesser-Zuführungseinheit (50), die an der Auflagestruktur (20) befestigt und mit der Kreismesser-Neigungseinheit (40) gekoppelt ist, um die Kreismesser-Neigungseinheit (40) und die Schneideeinheit (30) längs einer geradlinigen Zuführungsrichtung (V-V), die parallel zur Neigungsachse (Y-Y) oder mit ihr zusammenfallend ist, zwischen einer ersten Verfahrweggrenzposition und einer zweiten Verfahrweggrenzposition zu bewegen.

2. Schneidkopf (1) nach Anspruch 1, wobei:
- die Kreismesser-Zuführungseinheit (50) ein an der Auflagestruktur (20) befestigtes Zuführungs-Betätigungsorgan (51) und einen Schieber (52) umfasst, der mit dem Zuführungs-Betätigungsorgan (51) gekoppelt ist, um sich längs der geradlinigen Zuführungsrichtung (V-V) zwischen der ersten und der zweiten Verfahrweggrenzposition zu bewegen,
- die Kreismesser-Neigungseinheit (40) ein Rotations-Betätigungsorgan (41) umfasst, das starr an dem Schieber (52) befestigt und ausgebildet ist, um die Schneideeinheit (30) relativ zur Kreismesser-Neigungseinheit (50) um die Neigungsachse (Y-Y) zu drehen,
- die Schneideeinheit (30) ein Kipp-Betätigungsorgan (32) und eine Auflagebasis (33) umfasst, wobei das Kreismesser (31) an der Auflagebasis (33) montiert ist, um sich um die zweite Rotationsachse (A-A) zu drehen,
- die Auflagebasis (33) mit der Stützplatte (42) gekoppelt ist, um sich um die Kippachse (U-U) zu drehen, und das Kipp-Betätigungsorgan (32) mit der Auflagebasis (33) gekoppelt ist, um die Auflagebasis (33) um die Kippachse (U-U) relativ zur Stützplatte (42) zu drehen.

3. Schneidkopf (1) nach Anspruch 2, wobei:
- das Kipp-Betätigungsorgan (32) einen Zylinder (34) und einen Kolben (35) umfasst, der ausgebildet ist, um betätigt zu werden, um den Zylinder (34) längs der Ausfahrrichtung des Kolbens (35) zu bewegen,
- der Zylinder (34) mit der Stützplatte (42) gekoppelt ist, um sich um die parallel zur Kippachse (U-U) verlaufende Rotationsachse (B-B) zu drehen,
- ein Ende (35a) des Kolbens (35) drehbar mit der Auflagebasis (33) gekoppelt ist, um sich um eine parallel zur Kippachse (U-U) verlaufende Rotationsachse (C-C) zu drehen,

4. Schneidkopf (1) nach Anspruch 2 oder 3, wobei:
- das Zuführungs-Betätigungsorgan (51) einen Betätigungszylinder (53) umfasst, der an der Auflagestruktur (20) befestigt ist, und einen Kolben (54), der montiert ist, um sich relativ zum Betätigungszylinder (53) längs der geradlinigen Zuführungsrichtung (V-V) zu bewegen und an dem Schieber (52) befestigt ist,
- der Schieber (52) starr mit einer Platte (55) verbunden ist, die zwei Führungselemente (56) aufweist, die sich längs der geradlinigen Zuführungsrichtung (V-V) erstrecken,
- jedes Führungselement (56) an ein entsprechendes Führungselement (57) gekoppelt ist, das starr mit der Auflagestruktur (20) verbunden ist, so dass es längs der geradlinigen Zuführungsrichtung (V-V) gleitet.

5. Schneidkopf (1) nach einem der Ansprüche 1 bis 4, wobei:
- die Kreismesser-Neigungseinheit (40) ausgebildet ist, um die Schneideeinheit (30) und das Kreismesser (31) in einem Neigungswinkel im Bereich von 0° bis 45° zu neigen,
- die Auflagestruktur (20) ausgebildet ist, um sich um die erste Rotationsachse (Z-Z) durch einen Rotationswinkel im Bereich von -70° bis 45° zu drehen.

6. Schneidkopf (1) nach Anspruch 5, wobei:
- die Auflagefläche (21) rechtwinklig zur ersten Rotationsachse (Z-Z) liegt,
- das Kreismesser (31) - wenn der Rotationswinkel 0° beträgt und der Neigungswinkel 0° beträgt - rechtwinklig zur Auflagefläche (21) liegt.

7. Schneidemaschine (100) umfassend:
- einen Rahmen (101) mit zwei Führungselementen (102), die sich längs einer Längsrichtung (X-X) erstrecken,
- wenigstens einen Schneidkopf (1) nach einem der Ansprüche 1 bis 6,
wobei das Traggestell (10) montiert ist, um längs der Längsrichtung (X-X) zu gleiten.

8. Verfahren zum Betreiben eines Schneidkopfes (1) nach einem der Ansprüche 1 bis 6, wobei das Verfahren die folgenden Schritte umfasst, von einem Zustand, in dem das Kreismesser (31) sich in seiner Ruhestellung befindet und die Schneideeinheit (30) sich in der ersten Verfahrweggrenzposition befindet:
- Bewegen der Schneideeinheit (30) längs der geradlinigen Zuführungsrichtung (V-V), von der ersten Verfahrweggrenzposition zu der zweiten Verfahrweggrenzposition,
- Drehen der Schneideeinheit (30) um die Kippachse (U-U), um das Kreismesser von der Ruhestellung in die Schneidestellung zu bewegen,
- Bewegen der Schneideeinheit (30) längs der geradlinigen Zuführungsrichtung (V-V) von der zweiten Verfahrweggrenzposition zu der ersten Verfahrweggrenzposition,
- Drehen der Schneideeinheit (30) um die Kippachse (U-U), um das Kreismesser (31) von der Schneidestellung in die Ruhestellung zu bewegen.

## Revendications

1. Tête de coupe (1) pour une machine de découpe (100), ladite tête de coupe (1) comprenant :
- une base portante (10),
- une structure de support (20) montée sur ladite base portante (10) pour tourner autour d'un premier axe de rotation (Z-Z), ladite structure de support (20) comprenant une surface de support (21) pour une pièce à couper (P) et une zone de coupe (22), qui est configurée pour recevoir la pièce à découper (P),
- une unité de coupe (30) comprenant une lame circulaire (31) qui est montée pour tourner autour d'un deuxième axe de rotation (A-A), ladite unité de coupe (30) étant montée pour pivoter autour d'un axe de pivotement (U-U), parallèle audit deuxième axe de rotation (A-A) entre une position de repos, dans laquelle ladite lame circulaire (31) est désengagée de ladite zone de coupe (22) et une position de coupe, dans laquelle ladite lame circulaire (31) est dans ladite zone de coupe (22) pour couper ladite pièce à découper (P),
- une unité d'inclinaison de lame circulaire (40), qui est couplée à ladite unité de coupe (30) pour incliner ladite unité de coupe (30) autour d'un axe d'inclinaison (Y-Y) perpendiculaire audit premier axe de rotation (Z-Z) et audit deuxième axe de rotation (A-A),
- une unité d'avance de lame circulaire (50), fixée à ladite structure de support (20) et est couplée à ladite unité d'inclinaison de lame circulaire (40) pour déplacer ladite unité d'inclinaison de lame circulaire (40) et ladite unité de coupe (30) suivant une direction d'avance rectiligne (V-V), qui est parallèle ou coïncidente avec l'axe d'inclinaison (Y-Y), entre une première position de fin de course et une deuxième position de fin de course.

2. Tête de coupe (1) selon la revendication 1, dans laquelle :
- ladite unité d'avance de lame circulaire (50) comprend un élément d'actionnement d'avance (51) fixé à la structure de support (20) et un coulisseau (52) qui est couplé à l'élément d'actionnement d'avance (51) pour se déplacer suivant la direction d'avance rectiligne (V-V) entre lesdites première et deuxième positions de fin de course,
- ladite unité d'inclinaison de lame circulaire (40) comprend un élément d'actionnement de rotation (41), qui est uni rigidement audit coulisseau (52) et est configuré pour faire tourner ladite unité de coupe (30) par rapport à l'unité d'inclinaison de lame circulaire (50) autour de l'axe d'inclinaison (Y-Y),
- ladite unité de coupe (30) comprend un élément d'actionnement de pivotement (32) et une base de support (33), ladite lame circulaire (31) étant montée sur ladite base de support (33) pour tourner autour du deuxième axe de rotation (A-A),
- ladite base de support (33) est couplée à ladite plaque de support (42) pour tourner autour de l'axe de pivotement (U-U) et ledit élément d'actionnement de pivotement (32) est couplé à ladite base de support (33) pour faire tourner la base de support (33) autour de l'axe de pivotement (U-U) par rapport à la base de support (42).

3. Tête de coupe (1) selon la revendication 2, dans laquelle :
- ledit élément d'actionnement de pivotement (32) comprend un cylindre (34) et un piston (35) qui est configuré pour être actionné pour se déplacer par rapport au cylindre (34) suivant la direction d'extension du piston (35),
- ledit cylindre (34) est couplé à la plaque de support (42) pour tourner autour d'un axe de rotation (B-B) parallèle à l'axe de pivotement (U-U),
- une extrémité (35a) du piston (35) est couplée de manière rotative à la base de support (33) pour tourner autour d'un axe de rotation (C-C) parallèle à l'axe de pivotement (U-U).

4. Tête de coupe (1) selon la revendication 2 ou 3, dans laquelle :
- ledit élément d'actionnement d'avance (51) comprend un cylindre d'actionnement (53) fixé à la structure de support (20) et un piston (54) qui est monté pour se déplacer par rapport au cylindre d'actionnement (53) suivant la direction d'avance rectiligne (V-V) et fixé au coulisseau (52),
- ledit coulisseau (52) est uni rigidement à une plaque (55) ayant deux éléments de guidage (56) qui s'étendent suivant la direction d'avance rectiligne (V-V),
- chaque élément de guidage (56) est couplé à un élément de guidage respectif (57) uni rigidement à la structure de support (20), de manière à coulisser suivant la direction d'avance rectiligne (V-V).

5. Tête de coupe (1) selon l'une quelconque des revendications 1 à 4, dans laquelle :
- ladite unité d'inclinaison de lame circulaire (40) est configurée pour incliner l'unité de coupe (30) et la lame circulaire (31) avec un angle d'inclinaison allant de 0° à 45°,
- ladite structure de support (20) est configurée pour tourner autour du premier axe de rotation (Z-Z) sur un angle de rotation allant de -70° à 45°.

6. Tête de coupe (1) selon la revendication 5, dans laquelle :
- ladite surface de support (21) se trouve perpendiculaire au premier axe de rotation (Z-Z),
- quand ledit angle de rotation est 0° et ledit angle d'inclinaison est 0°, ladite lame circulaire (31) est perpendiculaire à la surface de support (21).

7. Machine de découpe (100) comprenant :
- un châssis (101) avec deux éléments de guidage (102) s'étendant suivant une direction longitudinale (X-X),
- au moins une tête de coupe (1) selon l'une quelconque des revendications 1 à 6, dans laquelle ladite base portante (10) est montée pour coulisser suivant ladite direction longitudinale (X-X).

8. Procédé de fonctionnement d'une tête de coupe (1) selon l'une quelconque des revendications 1 à 6, ledit procédé comprenant les étapes suivantes, à partir d'un état dans lequel ladite lame circulaire (31) est dans sa position de repos et ladite unité de coupe (30) est dans ladite première position de fin de course :
- le déplacement de ladite unité de coupe (30) suivant ladite direction d'avance rectiligne (V-V) de ladite première position de fin de course à ladite deuxième position de fin de course,
- la rotation de ladite unité de coupe (30) autour dudit axe de pivotement (U-U) pour déplacer ladite lame circulaire (31) de ladite position de repos à ladite position de coupe,
- le déplacement de ladite unité de coupe (30) suivant ladite direction d'avance rectiligne (V-V) de ladite deuxième position de fin de course à ladite première position de fin de course,
- la rotation de ladite unité de coupe (30) autour dudit axe de pivotement (U-U) pour déplacer ladite lame circulaire (31) de ladite position de coupe à ladite position de repos.
